# EUROPÄISCHE PATENTSCHRIFT

(11) **EP 1 317 949 B1**
(45) Veröffentlichungstag und Bekanntmachung des Hinweises auf die Patenterteilung: **30.03.2011**
(21) Anmeldenummer: 01129171.3
(22) Anmeldetag: 08.12.2001
(51) Int. Cl.: B01D 39/08, B01D 39/16

(54) **Mehrlagiges Verbundfiltermedium zur Serienfiltration**
Multilayered composite filter medium for filtration in series
Matériau filtrant composite à plusieurs couches pour filtration en série

(43) Veröffentlichungstag der Anmeldung: 11.06.2003
(60) Teilanmeldung: 10009203.0
(73) Patentinhaber: IBS Filtran Kunststoff-/Metallerzeugnisse GmbH, 51597 Morsbach (DE)
(72) Erfinder: Beer, Markus, 51597 Morsbach (DE); Rosendahl, Marco, 51597 Morsbach (DE); Stausberg, Wolfgang, 51597 Morsbach (DE)
(74) Vertreter: Polypatent

(56) Entgegenhaltungen:
- US-A- 5 701 893
- US-A- 5 770 077
- US-B1- 6 193 773
- DATABASE WPI Week 198536, Derwent Publications Ltd., London, GB; Class A88, AN 1985-221120 & JP 60 143811 A (SHIKISHIMA CANVAS KK) 30 Juli 1985

## Beschreibung

Gegenstand der Erfindung ist ein mehrlagiges Verbundfiltermedium zur Serienfiltration mit einer Anströmseite und einer Abströmseite bezüglich eines zu filternden Mediums. Verbundfiltermedien können als Filtermedien in Motorölfiltern, Getriebeölfiltern, Kraftstofffiltern oder Luftfiltern eingesetzt werden, wobei der Einsatz in Getriebeölfiltern bevorzugt ist.

Im Stand der Technik werden heute für die Filtrierung von Getriebeöl und auch Motoröl überwiegend Filter eingesetzt, die aus einteilig aufgebauten Filtervliesen bestehen. Hierbei handelt es sich meist um sogenannte Faservliese, die ungewebt sind und Glas, Cellulose oder synthetische Fasern sowie auch Metallfasern enthalten können. Mit diesen Filtermedien werden Verunreinigungen einer Größe ab >60 µm effektiv aus der zu filtrierenden Flüssigkeit entfernt. Kleinere Teilchen können jedoch mit diesem Material meist nicht ausreichend gefiltert werden.

Durch die Entwicklung neuerer Motor- und Getriebegenerationen, insbesondere stufenloser CVT-Getriebe ist es notwendig geworden, Filtermaterialien und Filter zu schaffen, die eine höhere Reinheit des Getriebeöls garantieren. Dies hängt damit zusammen, dass beispielsweise in den CVT-Getrieben die hydraulische Regelung elektronisch oder auch druckabhängig erfolgt und somit kleinste Verunreinigungen bereits Irritationen bei der Getriebesteuerung erzeugen können. Die zum Betrieb derartiger Getriebe notwendigen Ölreinheitsklassen können momentan nur durch Zuschaltung eines zusätzlichen Druckölfilters erreicht werden. Auch Anwendungen zur Erhöhung der Reinheit von Motoröl sind möglich.

Zukünftig soll das gesamte Schmutzpartikelspektrum in einem Filter durch Saugölfiltration filtriert werden können, wobei allein mit diesem Schritt die notwendige Ölreinheitsklasse erzielt werden soll. Um dies zu gewährleisten ist es daher dringend erforderlich, Filtermaterialien zu schaffen, die bezüglich ihrer Rückhaltung von Verunreinigungen effizienter sind und auch Verunreinigungen geringerer Größe zurückhalten können. Hierzu müssen die Eigenschaften der Filtermedien insbesondere in Hinsicht auf Druckverlust bei der Filtration, Filtrationseffizienz und Schmutzaufnahmevermögen verbessert werden.

Zur Lösung der Problematik ist es aus dem Stand der Technik bereits bekannt, mehrschichtige Filtermaterialien einzusetzen. Man strebt mit diesen mehrschichtigen Filtermaterialien eine sogenannte Serienfiltration an, bei der zunächst die groben Partikel über ein oder mehrere Filtermedien abgeschieden werden und die feinen Partikel anschließend über ein oder mehrere andere Filtermedien abgeschieden werden. Derartige Verbundfilter werden derzeit bereits in Getrieben, insbesondere auf dem amerikanischen Markt eingesetzt. Es handelt sich hierbei um Verbundfiltermedien, die aus einem Filtervlies und einem Filtergewebematerial bestehen, die mittels eines Klebers thermisch verbunden werden. Als Kleber werden häufig offen gewebte Polyesterkleber verwendet, die in Form von grobmaschigen Netzen mit unregelmäßig verteilten Maschen zwischen Filtervlies und Filtergewebe gelegt werden. Es werden auch Kleber in Granulatform eingesetzt, die auf die Materialien aufgestreut werden. Danach werden die Filterlagen durch Erhitzen verklebt.

Diese Verbundfilter besitzen jedoch den Nachteil, dass aufgrund des verwendeten Klebers und der vollflächigen Verklebung eine erhebliche Verringerung der Filtrationsfähigkeit des Filtermediums erfolgt, da der Kleber die offenen Poren des Filtergewebes größtenteils verschließt und somit die effektive Filtrationsfläche stark verringert. Weiterhin besitzen die verwendeten Klebernetze eine völlig ungeordnete Netzstruktur, was zu einer unregelmäßigen Verklebung führt. So besitzen einige Stellen im Filtermedium eine bessere Filtrationsfähigkeit als andere Stellen, an denen beispielsweise höhere Kleberkonzentrationen vorliegen. Dies führt im Ergebnis zu Verbundfiltern mit sehr unterschiedlichen Eigenschaften bezüglich Druckverlust, Filtrationseffizienz und Schmutzaufnahmevermögen, so dass eine Filterherstellung mit standardisierten Eigenschaften nicht möglich ist. Vielmehr kommt es bei der Herstellung zu erheblichen Qualitätsschwankungen und die Herstellung derartiger Filter ist extrem teuer.

Ein weiterer Nachteil liegt in der Beständigkeit der Klebeverbindung. Filtermedien sind erheblichen Temperaturschwankungen ausgesetzt, die im Extremfall zwischen -30 und +160°C liegen können. Die Festigkeit der Klebeverbindung wird stark beansprucht bei hohen wie bei niedrigen Temperaturen. Beispielsweise ist die Festigkeit der Klebeverbindung insbesondere bei hohen Temperaturen erheblich verringert, so dass es hier häufig zu einem teilweisen Ablösen der Filterlagen voneinander kommt.

Dies hat auch dazu geführt, dass sich Verbundfilter in diesem Bereich bisher noch nicht durchgesetzt haben, sondern vielmehr im überwiegenden Teil aller Fälle einteilig aufgebaute Filtervliese als Filtermedien verwendet werden.

Aus der JP 60 143811 A ist ein dreilagiges Verbundfiltermedium bekannt, wobei das Filtermedium zwei Filterlagen aus verschiedenen Filtermedien umfasst und wobei eine erste Filterlage aus Filtergewebe und eine zweite Filterlage aus Filtervliesstoff gebildet ist. Die Filterlagen sind miteinander mechanisch durch Vernadeln verfestigt.

In der US 5 770 077 A ist eine Filtertasche beschrieben, welche aus mindestens drei Filterlagen aus Filtervliesstoff gebildet ist. Die Verbindung zwischen den Lagen erfolgt an Punkten.

Weiterhin wird im Stand der Technik versucht, durch die Plissierung des Filtermediums eine Verbesserung der Filtrierung zu erreichen. Hierbei wird sehr häufig zickzackförmig gefaltetes Filterbahnmaterial verwendet, insbesondere um die Oberfläche der Filtermedien bei möglichst geringem Raumvolumen zu vergrößern. Derartige Filter, insbesondere für Motor- und Getriebeöl, werden beispielsweise beschrieben in der DE 19735993 A1, der WO 01/45823 A1 und der DE 4227744 A1. Dabei werden zickzackgeformte Filtermedien sowohl im Ölfilter- als auch im Luftfilterbereich eingesetzt.

Die technische Aufgabe der Erfindung ist es daher, ein mehrlagiges Verbundfiltermedium zur Verfügung zu stellen, das eine ausreichende Filtrierung von feinen und groben Verschmutzungen gewährleistet, möglichst lange Standzeiten besitzt und als standardisiertes Filtermedium mit definierter Filterfläche mit einfachen Prozessen herstellbar ist. Weiterhin sollen insbesondere optimierte Eigenschaften bezüglich Druckverlust Filtrationseffizienz und Schmutzaufnahmevermögen erzielt werden, um den problemlosen Einsatz in CVT-Getrieben ohne zusätzliche Druckfiltration zu ermöglichen.

Die technische Aufgabe der Erfindung wird gelöst durch ein mehrlagiges Verbundfiltermedium gemäß dem Gegenstand des Anspruchs 1.

Durch eine derartige Anordnung wird eine Serienfiltration erzielt, bei der zunächst im Rahmen einer Vorfiltration grobe Partikel in dem Filtervlies abgeschieden werden und anschließend die Hauptfiltration im Filtergewebe erfolgt und hierbei Schmutzpartikel eines Durchmessers von größer 10 µm entfernt werden können.

Weiterhin können sowohl das Filtervlies als auch die Filtergewebe bezüglich ihrer Eigenschaften entsprechend den Anforderungen des jeweiligen Getriebes gewählt werden, so dass die notwendige Reinheitsklasse für das zu filternde Medium gewährleistet ist.

Filtervliesstoffe sind ungewebte Textilverbundstoffe, bei denen die Textilfasern durch Verschlingung, kohäsive oder adhäsive Verbindungen hergestellt werden. Filtervlies besteht üblicherweise aus Polypropylen, Polyester Polyhexamethylen-adipinamid oder Viskose, deren Zusammenhalt im allgemeinen durch die den Fasern eigene Haftung gegeben ist. Diese Filtervliese können weiterhin mechanisch verfestigt werden, beispielsweise durch Vernadeln, Vermaschen oder auch durch Verwirbeln. Besonders bevorzugt sind Polyestervliese, die bevorzugt als Kondensationsprodukt von Dimethylterephthalat und Ethylenglykol erhalten werden. Weiterhin werden diese Filtervliese mechanisch durch Vernadeln verfestigt und besitzen in bevorzugter Ausführungsform eine Beschichtung aus einem Phenolharz, das insbesondere gegen Getriebeöl oder auch Motoröl resistent ist.

Als Filtergewebe im Sinne der Erfindung werden Erzeugnisse mit gekreuzten Fäden aus Materialien wie Wolle, Baumwolle, synthetische Fasern, Kohle, Metall, Glas, Asbestfasern oder auch Polymerfasern bezeichnet. Diese Filtergewebe besitzen definierte Porengrößen, die die Durchlässigkeit des Filtergewebes festlegen. In bevorzugter Ausführungsform wird als Filtergewebe ein thermoplastisches Gewebe eingesetzt, das beispielsweise bestehen kann aus Polyethylen, Polypropylen, Polyhexamethylen-adipinamid, Polyester und Mischpolymerisaten hiervon.

Die Partikelrückhaltung der verwendeten Filtervliese liegt in bevorzugter Weise bei > 60 µm, vorzugsweise > 100 µm. Die Partikeldurchlässigkeit der verwendeten thermoplastischen Filtergewebe liegt im Bereich von 10 bis 60 µm, vorzugsweise 25 bis 45 µm, besonders bevorzugt 35 bis 45 µm.

Zur Vereinfachung der Verschweißung von Filtergewebe und Filtervlies ist es bevorzugt, einen thermoplastischen Kunststoff für Filtervlies und Filtergewebe zu verwenden, das einen möglichst ähnlich gelagerten Schmelz- und Erweichungspunkt besitzt. In besonders bevorzugter Weise bestehen Filtervlies und Filtergewebe aus dem gleichen thermoplastischen Kunststoff.

Mittels der Verschweißung der Filtermedien, beispielsweise von Filtervlies und Filtergewebe wird eine definierte Verbindung an ganz bestimmten Punkten und/oder Flächen der Filteroberfläche erreicht. In bevorzugter Weise machen diese Schweißbereiche 0,5 bis 15 % der Oberfläche des Verbundfiltermediums aus. Diese können rasterförmig oder in beliebiger Anordnung auf der Oberfläche des Filtermediums verteilt sein. In einer besonders bevorzugten Ausführungsform machen die Schweißpunkte 1 bis 10 % und ganz besonders 2 bis 8 % der Oberfläche des Verbundfiltermediums aus.

Die erfindungsgemäßen mehrlagigen Verbundfiltermedien werden wie folgt hergestellt:
Die übereinander angeordneten Filterlagen werden in einen Spalt zwischen Oberwerkzeug und Unterwerkzeug eingeführt, die Filterlagen werden zwischen Oberwerkzeug und Unterwerkzeug geführt und durch Aktivierung von Energie an definierten Punkten und/oder Flächen miteinander verschweißt. Nach dem Verschweißen werden die verbundenen Filterlagen aus dem Werkzeug entnommen.

Das Verschweißen kann bevorzugt durch thermisches Erhitzen aber auch durch Ultraschallschweißen erfolgen. Die Ultraschallverschweißung ist besonders bevorzugt.

Bei der Ultraschallverschweißung werden die übereinander angeordneten Filterlagen zwischen Sonotrode und Amboss einer Ultraschweißvorrichtung angeordnet. Anschließend werden die Filterlagen zwischen Amboss und Sonotrode durch Aktivierung der Sonotrode an definierten Punkten und/oder Flächen mit Ultraschallenergie miteinander verschweißt.. Anschließend werden die verbundenen Filterlagen aus der Vorrichtung entnommen. In bevorzugter Ausführungsform liegt beim Ultraschallverschweißen die Filtergewebeseite auf der der Sonotrode zugewandten Seite.

Durch diese Herstellungsweise wird eine feste und dauerhafte Verbindung zwischen den Filtermedien gewährleistet, ohne dass zusätzliche Klebematerialien eingesetzt werden müssen. Dabei sind die Schweißkonturen durch Form und Anordnung der Schweißbereiche bestimmt. Sie sind reproduzierbar und erlauben damit die Produktion eines standardisierten Verbundfilters. Weiterhin wird eine nicht definierbare Verklebung der Filtergewebeporen wie er beispielsweise im Stand der Technik durch die verwendeten Kleber erfolgt, vermieden und es ist gewährleistet, dass die Filtrationsfunktion abgesehen von den Schweißbereichen ungehindert erfüllt werden kann.

Derartige mehrlagige Verbundfiltermedien werden in bevorzugter Weise eingesetzt als Filtermedien in Ölfiltern, Luftfiltern oder Kraftstofffiltern von Kraftfahrzeugen und ganz besonders bevorzugt in Getriebeölfiltern von Kraftfahrzeugen.

Ein weiterer Gegenstand der Erfindung ist ein Filter, enthaltend das erfindungsgemäße mehrlagige Verbundfiltermedium gemäß der Erfindung. Vorzugsweise besitzt das Filtermedium im Filter eine flache, taschenförmige oder plissierte Form.

Mit dem erfindungsgemäßen mehrlagigen Verbundfiltermedium ist es möglich, eine höhere Effizienzleistung im Saug- und Druckölbereich, insbesondere für Getriebe- und Motoranwendungen zu erreichen. Es erfolgt dabei eine Serienfiltration, wobei in bevorzugter Ausführungsform gröbere Schmutzpartikel in dem Filtervlies und feinere Schmutzpartikel in dem nachgeschalteten Filtergewebe zurückgehalten werden. Durch diesen Aufbau des Filtermediums werden die Vorteile der O-berflächenfiltration und der Tiefenfiltration kombiniert. Mit dem erfindungsgemäßen Verbundfiltermedium, das bevorzugt mittels Ultraschallverschweißen verbunden ist, erhält das Filtermedium eine besondere Schweißkontur, die ein Optimum an offener Fläche und damit an Durchflutungsfläche gewährleistet und andererseits eine dauerhafte Verbindung der Filtrationslagen sicherstellt. Weiterhin wird eine standardisierte Herstellung eines solchen Filtermediums gewährleistet und eine Herstellung mit geringen Toleranzen ermöglicht. Die so hergestellten Filtermedien besitzen auch verbesserte Eigenschaften bezüglich Druckverlust, Filtrationseffizienz und Schmutzaufnahmevermögen und können insbesondere zur Getriebeölfiltration in CVT-Getrieben eingesetzt werden, ohne dass eine zusätzliche Druckölfiltration wie bisher notwendig ist. Vielmehr wird eine einwandfreie Getriebefunktion und die Einhaltung der hierfür notwendigen Ölreinheitsklassen gewährleistet.

Die nachfolgende Figur soll die Erfindung näher erläutern:

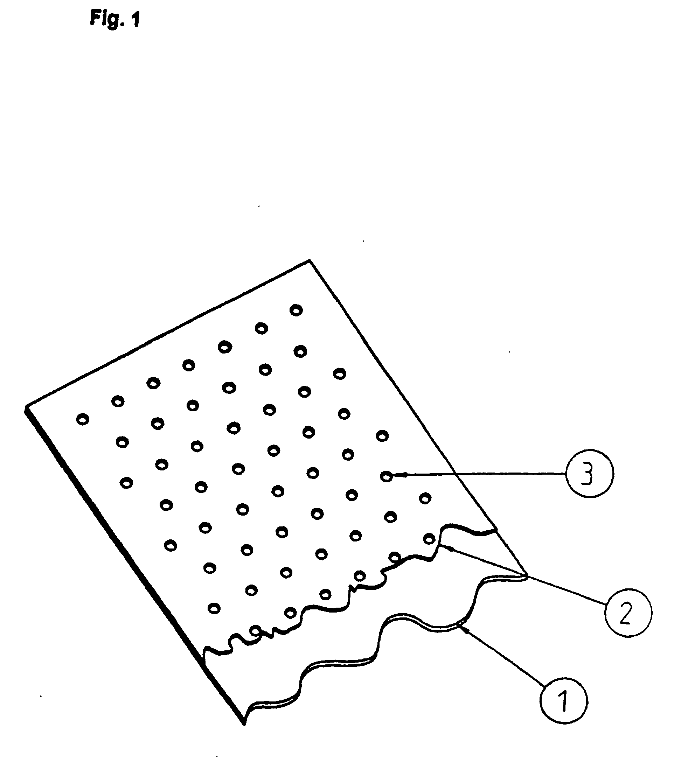

Fig.1 zeigt ein mehrlagiges Verbundfiltermedium gemäß der Erfindung. Die Ziffer 1 ist das Filtervlies, die Ziffer 3 bezeichnet das Filtergewebe und in Ziffer 2 sind die ultraschallverschweißten Konturen zu erkennen, die hier rasterförmig auf der Oberfläche des Filtermediums verteilt sind.

### Beispiele

Die nachfolgenden Beispiele sollen die Vorteile des mehrlagigen Verbundfiltermediums gemäß der Erfindung näher erläutern.

### Verwendete Materialien

Für die Versuche wurde ein chemisch verfestigtes nichtgewebtes Polyesterfiltervlies mit einem nachgeschalteten 40 µm Filtergewebe eingesetzt. Beide Materialien bestehen aus Polyester. Die Materialien wurden anschließend ultraschallverschweißt bei einer Frequenz von 20 kHz einer Amplitude von 100 %, einer Geschwindigkeit von 5 m/s und einem Abstand zwischen Sonotrode und Walze von 1,7 mm. Die Schweißpunkte wurden rasterförmig aufgebracht, so dass die Schweißpunkte 2,5 % der Oberfläche des Filtermaterials ausmachen. Es wurden anschließend die Eigenschaften des so hergestellten Verbundfiltermediums verglichen mit einem Verbundfiltermedium, das in herkömmlicher Weise mittels einem grobmaschigen Klebernetz hergestellt wurde.

### Fließtest der Filtermedien

Mittels eines Fließtestes wurde der Druckabfall eines Filters bei gewählter Durchflussrate und Temperatur bei den erfindungsgemäßen Verbundfiltermedien und laminierten Verbundfiltermedien bestimmt. Es wurden die gleichen Testfilter im gleichen Testöl und bei gleicher Durchflussrate und Temperatur einmal mit laminiertem Medium und einmal mit ultraschallverschweißtem Medium gemessen.

**Tab. 1**

| **Nr.** | **Verbindungsart** | **Durchfluss** | **Temperatur** | **Druck** |
|---|---|---|---|---|
| 1 | laminiert | 20 l/m | 24°C | 244,6 mbar |
| 2 | laminiert | 10 l/m | -4 °C | 599,6 mbar |
| 3 | verschweißt | 20 l/m | 24 °C | 153,3 mbar |
| 4 | verschweißt | 10 l/m | -4 °C | 427,9 mbar |

Beim Vergleich der Nummern 1 und 3 zeigt sich eine Reduzierung des Druckabfalls um 37% bei einer Temperatur von 24°C. Bei dem Versuch bei geringeren Temperaturen zeigt sich bei Vergleich Nr. 2 zu Vergleich Nr. 4 eine Reduzierung des Druckabfalls um 29%.

Diese Ergebnisse zeigen, dass das ultraschallverschweißte Verbundfiltermedium gegenüber dem mit Kleber laminierten Medium eine Reduzierung des Druckabfalls um ca. 30% aufweist.

Der Fließtest wurde nach ISO 3968, angepasst für Saugölfilter durchgeführt, wobei der Druckabfall über den Durchfluss dargestellt wurde.

### Bezugszeichenliste

- 1: Filtervlies
- 2: Filtergewebe
- 3: ultraschallverschweißte Schweißkontur

## Patentansprüche

1. Mehrlagiges Verbundfiltermedium zur Serienfiltration mit einer Anströmseite und einer Abströmseite bezüglich eines zu filternden Mediums, wobei das Filtermedium aus zwei Filterlagen aus verschiedenen Filtermedien besteht, wobei eine erste Filterlage aus Filtergewebe mit gekreuzten Fäden und eine zweite Filterlage aus Filtervliesstoff als ungewebter Textilverbundstoff gebildet ist und die Filterlagen über die gesamte Oberfläche an definierten Punkten miteinander verschweisst sind und der Filtervliesstoff auf der Anströmseite und das Filtergewebe auf der Abströmseite angeordnet sind.

2. Mehrlagiges Verbundfiltermedium nach Anspruch 1,
**dadurch gekennzeichnet,**
**dass** thermoplastische Filtermedien eingesetzt werden.

3. Mehrlagiges Verbundfiltermedium nach den Ansprüchen 1 oder 2,
**dadurch gekennzeichnet,**
**dass** die Partikelrückhaltung des Filtervliesstoffes > 60 µm beträgt.

4. Mehrlagiges Verbundfiltermedium nach Ansprüchen 1 bis 3,
**dadurch gekennzeichnet,**
**dass** die Partikelrückhaltung des Filtergewebes 10 bis 60 µm beträgt.

5. Mehrlagiges Verbundfiltermedium nach den Ansprüchen 1 bis 4,
**dadurch gekennzeichnet,**
**dass** die Schweisspunkte oder Schweissflächen 0,5 bis 15 % der Oberfläche des Verbundfiltermediums ausmachen.

6. Mehrlagiges Verbundfiltermedium nach den Ansprüchen 1 bis 5,
**dadurch gekennzeichnet,**
**dass** die Schweisspunkte rasterförmig auf der Oberfläche des Filtermediums angeordnet sind.

7. Verfahren zur Herstellung des Verbundfiltermediums nach den Ansprüchen 1 bis 6,
**gekennzeichnet durch** die folgenden Schritte:
a. die übereinander angeordneten Filterlagen werden in einen Spalt zwischen Oberwerkzeug und Unterwerkzeug eingeführt,
b. die Filterlagen werden zwischen Oberwerkzeug und Unterwerkzeug geführt und **durch** Aktivierung von Energie an definierten Punkten und/oder Flächen miteinander verschweisst,
c. nach dem Verschweissen werden die verbundenen Filterlagen aus dem Werkzeug entnommen.

8. Verfahren nach Anspruch 7,
**dadurch gekennzeichnet,**
**dass** das Verschweissen durch Ultraschallenergie zwischen einer Sonotrode und einem Amboss erfolgt.

9. Verfahren nach Anspruch 7,
**dadurch gekennzeichnet,**
**dass** das Verschweissen durch thermisches Erhitzen erfolgt.

10. Verfahren nach Anspruch 8,
**dadurch gekennzeichnet,**
**dass** beim Ultraschallverschweissen die Filtergewebeseite auf der der Sonotrode zugewandten Seite angeordnet ist.

11. Verwendung des Verbundfiltermediums nach den Ansprüchen 1 bis 6 als Filtermedium in Motorölfiltern, Getriebeölfiltern, Kraftstofffiltern oder Luftfiltern.

12. Filter enthaltend das mehrlagige Verbundfiltermedium nach den Ansprüchen 1 bis 6.

## Claims

1. Multilayer composite filter medium for serial filtration having an approach-flow side and a discharge-flow side in relation to a medium to be filtered, wherein the filter medium consists of two filter layers of differing filter media, wherein a first filter layer is formed from woven filter fabric having crossed threads and a second filter layer is formed from filter fleece in the form of a nonwoven bonded fabric and the filter layers are welded together at defined points over the entire surface and the filter fleece is disposed at the approach-flow side and the woven filter fabric is disposed at the discharge-flow side.

2. Multilayer composite filter medium according to claim 1,
**characterized in**
**that** thermoplastic filter media are used.

3. Multilayer composite filter medium according to claims 1 or 2,
**characterized in**
**that** the particle retention of the filter fleece is > 60 µm.

4. Multilayer composite filter medium according to claims 1 to 3,
**characterized in**
**that** the particle retention of the woven filter fabric is 10 to 60 µm.

5. Multilayer composite filter medium according to claims 1 to 4,
**characterized in**
**that** the weld points or weld areas make up 0.5 to 15% of the surface of the composite filter medium.

6. Multilayer composite filter medium according to claims 1 to 5,
**characterized in**
**that** the weld points are arranged in a grid pattern on the surface of the filter medium.

7. Method of manufacturing the composite filter medium according to claims 1 to 6,
**characterized by** the following steps:
a. the superimposed filter layers are introduced into a gap between upper tool and lower tool,
b. the filter layers are conveyed between upper tool and lower tool and by activation of energy are welded at defined points and/or areas to one another,
c. after being welded to one another the bonded filter layers are removed from the tool.

8. Method according to claim 7,
**characterized in**
**that** the welding operation is effected by ultrasonic energy between a sonotrode and an anvil.

9. Method according to claim 7,
**characterized in**
**that** the welding operation is effected by thermal heating.

10. Method according to claim 8,
**characterized in**
**that** during the ultrasonic welding operation the woven filter fabric side is disposed at the side facing the sonotrode.

11. Use of the composite filter medium according to claims 1 to 6 as a filter medium in engine oil filters, gear oil filters, fuel filters or air filters.

12. Filter containing the multilayer composite filter medium according to claims 1 to 6.

## Revendications

1. Élément de filtrage composite multicouche destiné au filtrage en série présentant un côté arrivée et un côté sortie par rapport à un fluide à filtrer, l'élément de filtrage étant constitué de deux couches de filtrage réalisées dans des matériaux filtrants différents, une première couche de filtrage étant formée de tissu filtrant avec des fils croisés et une seconde couche de filtrage à base de non-tissé filtrant sous forme de matériau composite textile non tissé et les couches de filtrage étant soudées les unes aux autres sur l'ensemble de la surface en des points définis et le non-tissé filtrant et le tissu filtrant étant disposés respectivement sur le côté arrivée et le côté sortie.

2. Élément de filtrage composite multicouche selon la revendication 1,
**caractérisé en ce que**
des matériaux filtrants thermoplastiques sont utilisés.

3. Élément de filtrage composite multicouche selon la revendication 1 ou 2,
**caractérisé en ce que**
la retenue de particules du non-tissé filtrant est > 60 µm.

4. Élément de filtrage composite multicouche selon les revendications 1 à 3,
**caractérisé en ce que**
la retenue de particules du tissu filtrant va de 10 à 60 µm.

5. Élément de filtrage composite multicouche selon les revendications 1 à 4,
**caractérisé en ce que**
les points de soudage ou les surfaces de soudage constituent 0,5 à 15 % de la surface de l'élément de filtrage composite.

6. Élément de filtrage composite multicouche selon les revendications 1 à 5,
**caractérisé en ce que**
les points de soudage sont disposés en forme de trame sur la surface de l'élément de filtrage.

7. Procédé pour fabriquer l'élément de filtrage composite selon les revendications 1 à 6,
**caractérisé par** les étapes suivantes :
a. les couches de filtrage disposées les unes au-dessus des autres sont introduites dans une fente entre l'outil supérieur et l'outil inférieur,
b. les couches de filtrage sont guidées entre l'outil supérieur et l'outil inférieur et sont soudées les unes aux autres par activation d'énergie en des points définis et/ou des surfaces définies,
c. après le soudage, les couches de filtrage reliées sont retirées de l'outil.

8. Procédé selon la revendication 7,
**caractérisé en ce que**
le soudage s'effectue par énergie ultrasonore entre une sonotrode et une enclume.

9. Procédé selon la revendication 7,
**caractérisé en ce que**
le soudage s'effectue par réchauffement thermique.

10. Procédé selon la revendication 8,
**caractérisé en ce que**
le côté du tissu filtrant est disposé lors du soudage par ultrasons sur le côté tourné vers la sonotrode.

11. Utilisation de l'élément de filtrage composite selon les revendications 1 à 6 comme élément de filtrage dans des filtres pour huile moteur, des filtres pour huile de boîte de vitesses, des filtres pour carburant ou des filtres à air.

12. Filtre contenant l'élément de filtrage composite multicouche selon les revendications 1 à 6.
